# EUROPÄISCHE PATENTSCHRIFT

(11) **EP 2 749 439 B1**
(45) Veröffentlichungstag und Bekanntmachung des Hinweises auf die Patenterteilung: **10.05.2017**
(21) Anmeldenummer: 13198102.9
(22) Anmeldetag: 18.12.2013
(51) Int. Cl.: B60H 1/34

(54) **Luftausströmdüse**
Air outlet nozzle
Buse d'évacuation d'air

(30) Priorität: 28.12.2012 DE 102012224482
(43) Veröffentlichungstag der Anmeldung: 02.07.2014
(73) Patentinhaber: MAHLE Behr GmbH & Co. KG, 70469 Stuttgart (DE)
(72) Erfinder: Rais, Dr. Thomas, 71672 Marbach/Neckar (DE); Komowski, Michael, 71263 Weil der Stadt (DE)
(74) Vertreter: Grauel, Andreas

(56) Entgegenhaltungen:
- DE-A1-102008 033 339
- DE-A1-102009 021 663
- DE-A1-102011 003 489
- DE-B3-102008 044 497

## Beschreibung

### Technisches Gebiet

Die Erfindung betrifft eine Luftausströmdüse mit einem Luftkanal, einem Ausströmkörper und einem Drallkörper, wobei der Drallkörper innerhalb des Ausströmkörpers angeordnet ist und der Ausströmkörper zumindest teilweise innerhalb des Luftkanals (2) angeordnet ist.

### Stand der Technik

Luftausströmdüsen bieten oft die Möglichkeit sowohl diffuse Luftströmungen als auch gerichtete Luftströmungen zu erzeugen. Hierzu können die Luftausströmdüsen mechanisch verstellt werden, wodurch zwischen einer diffusen Luftströmung und einer gerichteten Luftströmung unterschieden werden kann. Es sind auch Mischzustände, in welchen eine teilweise diffuse und teilweise gerichtete Luftströmung erzeugt wird, bekannt.

Dem Nutzer wird eine Rückmeldung über den aktuell eingestellten Zustand der Luftausströmdüse gegeben. Hierbei sind im Stand der Technik Lösungen bekannt, die dem Nutzer eine Rückmeldung über eine an der Düse angebrachte Symbolik geben. Die Symbolik kann dabei beispielsweise auf den für den Nutzer sichtbaren Bereich der Luftausströmdüse angebracht sein.

Die DE 10 2008 033 339 A1 offenbart eine gattungsgemäße Luftausströmdüse. Die DE 10 2009 021 663 A1 offenbart eine Luftausströmdüse, bei welcher ein Innenrohr in Längsrichtung verschiebbar ist.

Nachteilig an den Lösungen nach dem Stand der Technik ist, dass die Symbolik an der Düse vom Nutzer nicht gut zu verstehen sein könnte, außerdem ist die Bedienung der Düse oft nicht intuitiv. Darüber hinaus ist es insbesondere bei einer gerichteten Luftströmung für den Nutzer anhand der Stellung der Luftauslassdüse schwer erkennbar, in welche Richtung die Luftströmung gerichtet ist.

### Darstellung der Erfindung, Aufgabe, Lösung, Vorteile

Daher ist es die Aufgabe der vorliegenden Erfindung eine Luftausströmdüse bereitzustellen, die gegenüber dem Stand der Technik verbessert ist.

Die Aufgabe der vorliegenden Erfindung wird durch eine Luftausströmdüse mit den Merkmalen gemäß Anspruch 1 gelöst, welche über ein intuitives Verstellkonzept verstellt werden kann, wobei eine für den Nutzer klare Symbolik zur Darstellung der gewählten Einstellung vorgesehen ist. Weiterhin soll die Luftausströmdüse eine klare Indikation der Luftströmungsrichtung gewährleisten.

Ein Ausführungsbeispiel der Erfindung betrifft eine Luftausströmdüse mit einem Luftkanal, einem Ausströmkörper und einem Drallkörper, wobei der Drallkörper zumindest zwei drehbare Ringscheiben umfasst und innerhalb des Ausströmkörpers angeordnet ist, und wobei der Ausströmkörper zumindest teilweise innerhalb des Luftkanals angeordnet ist, wobei der Ausströmkörper entlang der Luftströmungsrichtung im Luftkanal relativ zum Luftkanal beweglich ist, wobei die Ausrichtung des Ausströmkörpers zum Luftkanal um einen zur Mittelachse des Luftkanals horizontalen und/oder um einen zur Mittelachse des Luftkanals vertikalen Winkel veränderbar ist, und wobei der Drallkörper durch eine Relativbewegung des Ausströmkörpers zum Luftkanal bewegbar ist.

Über den Ausströmkörper tritt die Luft, welche durch den Luftkanal strömt, aus der Luftausströmdüse aus. Der Ausströmkörper kann dabei relativ zum Luftkanal bewegt werden, wodurch die austretende Luftströmung gezielt in ihrer Richtung beeinflusst werden kann. Ein Drallkörper im Inneren des Ausströmkörpers ist besonders vorteilhaft, um die Luftströmung gezielt zu beeinflussen und so eine gerichtete Luftströmung, eine diffuse Luftströmung oder eine Mischform aus gerichteter und diffuser Luftströmung, zu erreichen.

Dabei ist es zweckmäßig, wenn die Ringscheiben des Drallkörpers durch eine lineare Bewegung des Ausströmkörpers im und relativ zu dem Luftkanal rotatorisch bewegbar sind.

Der Ausströmkörper ist in seiner Lage relativ zum Luftkanal sowohl um einen horizontalen Winkel als auch um einen vertikalen Winkel um seine Mittelachse verschiebbar. Die Mittelachse des Ausströmkörpers verläuft dabei im Wesentlichen entlang seiner Hauptdurchströmungsrichtung. Somit kann der Ausströmkörper relativ zum Luftkanal schräg gestellt werden.

Weiterhin kann es besonders vorteilhaft sein, wenn der Drallkörper durch eine Relativbewegung des Ausströmkörpers entlang der Luftströmungsrichtung im Luftkanal relativ zum Luftkanal bewegbar ist.

Eine Kopplung des Drallkörpers an die Relativbewegung des Ausströmkörpers relativ zum Luftkanal ist besonders vorteilhaft, da so der Drallkörper auf besonders einfache Weise beeinflusst werden kann. Eine intuitive Bedienung der Luftausströmdüse lässt sich dadurch besonders einfach realisieren.

Ein bevorzugtes Ausführungsbeispiel ist dadurch gekennzeichnet, dass eine Mehrzahl von Drallkörpern innerhalb des Ausströmkörpers angeordnet ist.

Durch eine Mehrzahl von Drallkörpern kann die Luftströmung besonders einfach beeinflusst werden. Insbesondere die diffuse Luftströmung lässt sich über eine Mehrzahl von Drallkörpern einfach erzeugen.

Auch ist es zu bevorzugen, wenn der Ausströmkörper über ein Kugelgelenk im Luftkanal gelagert ist.

Durch die Lagerung des Ausströmkörpers im Luftkanal über ein Kugelgelenk, kann der Winkel zwischen dem Ausströmkörper und dem Luftkanal besonders einfach verändert werden. Das Kugelgelenk verhindert zudem unerwünschte Luftströmungen zwischen dem Ausströmkörper und dem Luftkanal.

In einer besonders günstigen Ausgestaltung der Erfindung ist es außerdem vorgesehen, dass durch eine Verstellung der Ringscheiben des Drallkörpers oder der Drallkörper eine diffuse Luftströmung und/oder eine gerichtete Luftströmung erzielbar ist.

Durch einen oder mehrere Drallkörper lässt sich die Luftströmung innerhalb der Luftausströmdüse gezielt beeinflussen, wodurch eine diffuse oder eine gerichtete Luftströmung erzeugt werden kann. Die Drallkörper können dabei beispielsweise als rotorähnliche Elemente ausgeführt sein, die in den Luftstrom im Inneren der Luftausströmdüse eingebracht sind.

In einer alternativen Ausgestaltung der Erfindung, kann es vorgesehen sein, dass durch das Herausziehen des Ausströmkörpers relativ zum Luftkanal die Anordnung der Ringscheiben des Drallkörpers oder der Drallkörper derart änderbar ist, dass eine gerichtete Luftströmung entsteht, wobei der Ausströmkörper bis zu einer durch einen Anschlag definierten Abstand aus dem Luftkanal herausziehbar ist.

Eine Kopplung der Drallkörper an die Relativbewegung des Ausströmkörpers ermöglicht eine besonders einfache und für den Nutzer intuitive Beeinflussung der Strömungsausbildung. Durch ein Herausziehen des Ausströmkörpers aus dem Luftkanal wird die Luftströmung fokussiert Gedanklich zieht der Nutzer die Luftströmung zu sich hin, was er intuitiv mit einem Fokussieren der Luftströmung gleichsetzt.

Das vollständige Herausziehen des Ausströmkörpers aus dem Luftkanal ist durch einen Anschlag verhindert. Der Anschlag definiert dabei eine maximale Länge um die der Ausströmkörper aus dem Luftkanal herausziehbar ist.

Weiterhin ist es zu bevorzugen, wenn durch das Hineindrücken des Ausströmkörpers in den Luftkanal, die Anordnung der Ringscheiben des Drallkörpers oder der Drallkörper derart änderbar ist, dass eine diffuse Luftströmung entsteht, wobei der Ausströmkörper bis zu einer durch einen zweiten Anschlag definierten Tiefe in den Luftkanal hineindrückbar ist.

Durch ein Wegdrücken des Ausströmkörpers in den Luftkanal hinein wird eine diffuse Luftströmung erreicht. Der Nutzer schiebt die Luftströmung gedanklich von sich weg. Die Kopplung der Drallkörper an die Bewegung des Ausströmkörpers ist eine besonders einfache Beeinflussungsmöglichkeit für die Ausrichtung der Drallkörper.

Das vollständige Hineindrücken des Ausströmkörpers in den Luftkanal wird durch einen Anschlag verhindert. Über den Anschlag wird so sichergestellt, dass der Ausströmkörper nicht so weit in den Luftkanal hineingedrückt wird, dass er vom Nutzer nicht mehr greifbar ist.

Gemäß einer besonders bevorzugten Weiterbildung der Erfindung kann es vorgesehen sein, dass die Luftausströmdüse in einen Instrumententräger, insbesondere einen Instrumententräger eines Kraftfahrzeugs, integriert ist, wobei die Luftausströmdüse im Instrumententräger versenkbar ist.

Mit versenkbar ist hier gemeint, dass die Luftausströmdüse so in den Instrumententräger integriert ist, dass sie bündig mit dem Instrumententräger abschließt und so positioniert ist, dass sie nicht über diesen hinaussteht. Dies gilt insbesondere für den Zustand, in welchem der Ausströmkörper tiefst möglich in den Luftkanal hineingedrückt ist. Im herausgezogenen Zustand kann beispielsweise der Ausströmkörper über den Instrumententräger hinausstehen.

Darüber hinaus kann es vorteilhaft sein, wenn der Ausströmkörper und der Luftkanal jeweils durch rohrförmige Grundkörper gebildet sind, wobei der Ausströmkörper zumindest teilweise innerhalb des Luftkanals angeordnet ist.

Es ist besonders vorteilhaft, wenn der Ausströmkörper und der Luftkanal miteinander korrespondierende Formgebungen haben. Dies ist insbesondere vorteilhaft, um ein einfaches Hineindrücken, beziehungsweise Herausziehen des Ausströmkörpers in oder aus dem Luftkanal zu ermöglichen.

Als Grundform der Rohre kommen dabei beispielsweise runde, elliptische, tropfenförmige oder rechteckige Rohre in Frage. Grundsätzlich ist jedoch auch eine Vielzahl darüber hinausgehender Formgebungen realisierbar.

Ein weiteres bevorzugtes Ausführungsbeispiel ist dadurch gekennzeichnet, dass der Ausströmkörper durch Hineindrücken in den Luftkanal aus einer Verhakung lösbar ist und durch eine Feder zumindest teilweise aus dem Luftkanal hinausdrückbar ist.

Besonders vorteilhaft ist es, wenn eine Relativbewegung des Ausströmkörpers in den Luftkanal hinein oder aus dem Luftkanal heraus eine Verdrehung der Drallkörper verursacht. Auf diese Weise ist es möglich die Beeinflussung der Luftströmung direkt an die Relativbewegung des Ausströmkörpers zum Luftkanal zu koppeln. Dies ermöglicht eine intuitive Bedienung der Luftausströmdüse.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht einer Luftausströmdüse, wobei die Drallkörper so positioniert sind, dass eine diffuse Luftströmung entsteht,
- Fig. 2: eine Schnittansicht einer Luftausströmdüse, wobei die Drallkörper so positioniert sind, dass eine gerichtete Luftströmung entsteht,
- Fig. 3: eine perspektivische Schnittansicht durch eine Luftausströmdüse mit einem aus dem Luftkanal herausgezogenen Ausströmkörper und einer Positionierung der Drallkörper, so dass eine gerichtete Luftströmung entsteht,
- Fig. 4: eine perspektivische Schnittansicht durch eine Luftausströmdüse mit einem in den Luftkanal hineingedrückten Ausströmkörper und einer Positionierung der Drallkörper für eine diffuse Luftströmung,
- Fig. 5: eine Schnittansicht einer Luftausströmdüse zur Verdeutlichung der horizontalen Verstellbarkeit des Ausströmkörpers,
- Fig. 6: eine Schnittansicht einer Luftausströmdüse zur Verdeutlichung der vertikalen Verstellbarkeit des Ausströmkörpers, und
- Fig. 8: eine Aufsicht auf die Luftaustrittsöffnung, wobei die Drallkörper jeweils drei Schaufeln aufweisen.

### Bevorzugte Ausführug der Erfindung

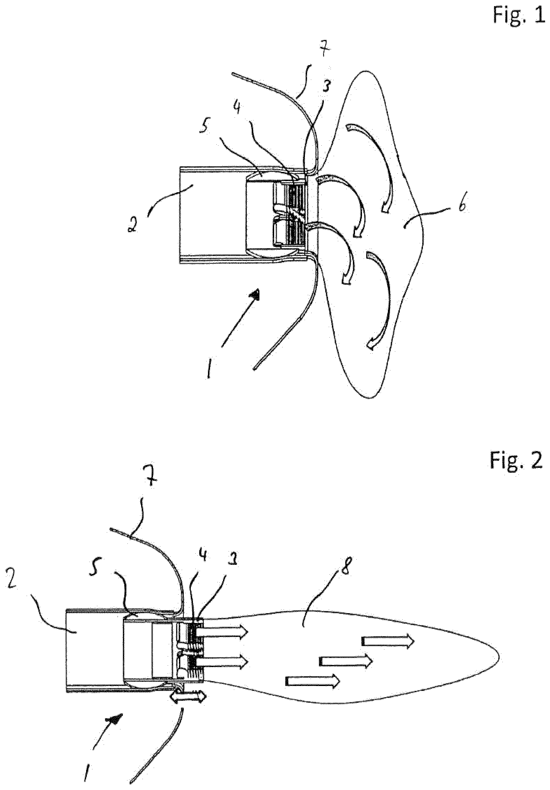

Die Fig. 1 zeigt eine Schnittansicht einer Luftausströmdüse 1, welche in einen Instrumententräger 7 eingelassen ist. Die Luftausströmdüse 1 besteht im Wesentlichen aus einem Luftkanal 2, in weichem ein Ausströmkörper 3 angeordnet ist. Der Ausströmkörper 3 ist mittels eines Kugelgelenkes 5 im Luftkanal 2 gelagert. Der Ausströmkörper 3 ist sowohl entlang der Hauptdurchströmungsrichtung des Luftkanals 2 als auch in einem Winkel zu dieser Hauptdurchströmungsrichtung relativ zum Luftkanal 2 beweglich.

Der Ausströmkörper 3 weist in seinem Inneren eine Mehrzahl von Drallkörpern 4 auf. Über diese Drallkörper 4 kann die Luftströmung, welche durch den Luftkanal 2 und schließlich durch den Ausströmkörper 3 der Luftausströmdüse 1 strömt, beeinflusst werden.

In der Fig. 1 ist die Luftausströmdüse 1 so eingestellt, dass eine diffuse Luftströmung 6 am Austritt der Luftausströmdüse 1 entsteht. Die Luft wird hierbei durch die Drallkörper 4 entsprechend abgelenkt, so dass die diffuse Luftströmung 6 entstehen kann.

Der Ausströmkörper 3 ist in der Fig. 1 vollständig in den Luftkanal 2 der Luftausströmdüse 1 hineingedrückt. Durch das Eindrücken des Ausströmkörpers 3 in den Luftkanal 2 werden die Drallkörper 4 so verstellt, dass sie eine diffuse Luftströmung 6 erzeugen.

Die Fig. 2 zeigt einen Schnitt durch eine Luftausströmdüse 1, wie sie bereits in Fig. 1 gezeigt wurde. Abweichend zur Fig. 1 ist der Ausströmkörper 3 aus dem Luftkanal 2 hinausgezogen. Die Drallkörper 4 innerhalb des Ausströmkörpers 3 sind dabei so verstellt, dass die Luft, welche durch den Ausströmkörper 3 aus der Luftausströmdüse 1 hinausströmt, eine gerichtete Luftströmung 8 ergibt.

Der Ausströmkörper 3 ist relativ zum Luftkanal 2 sowohl herausziehbar als auch hineindrückbar, außerdem kann der Ausströmkörper 3 sowohl in einem horizontalen Winkel als auch in einem vertikalen Winkel gegenüber dem Luftkanal 2 bewegt werden. Zusätzlich kann auch eine Wischbewegung aus einer horizontale und einer vertikalen Bewegung erfolgen.

Die Drallkörper 4 im Inneren des Ausströmkörpers 3 sind so ausgeführt, dass durch eine Bewegung des Ausströmkörpers 3 in den Luftkanal 2 hinein oder aus dem Luftkanal 2 heraus die Position der Drallkörper 4 verändert wird, wodurch eine diffuse Luftströmung 6 oder eine gerichtete Luftströmung 8 entstehen kann.

Eine Veränderung der Position der Drallkörper kann beispielsweise über ein Getriebe erreicht werden, welches die im Wesentlichen translatorische Bewegung des Ausströmkörpers in eine rotatorische Bewegung der Drallkörper übersetzt. Hierzu kann eine Zahnstange verwendet werden, deren Zähne in ein Zahnrad eingreifen, das auf der Drehachse der Drallkörper gelagert ist. Die Drallkörper sind dabei vorteilhafterweise auf einer gemeinsamen oder mehreren über Getriebe miteinander verbundenen Drehachsen gelagert, wobei die Drehachsen der Drallkörper über das mit der Zahnstange im Eingriff stehende Zahnrad angetrieben werden.

Auch andere alternative Ausführungsformen eines Getriebes für die Übertragung der Bewegung des Ausströmkörpers auf die Drallkörper sind vorsehbar. Unter anderem beispielsweise auch die Kopplung der Bewegung des Ausströmkörpers an die Drallkörper über einen Elektromotor, wobei die Bewegung des Ausströmkörpers über Sensoren erfasst wird und über ein Steuergerät in einen Steuerbefehl für einen Elektromotor übersetzt wird der die Positionsveränderung der Drallkörper bewirkt. Eine Kopplung mehrerer Luftausströmdüsen an die Bewegung eines Ausströmkörpers wäre hierbei möglich.

Die Drallkörper 4 werden durch ein Hineindrücken beziehungsweise Herausziehen des Ausströmkörpers 3 aus dem Luftkanal 2 gegeneinander verdreht. Durch die Mehrzahl von Drallkörpern 4 findet durch eine Verdrehung der Drallkörper 4 relativ zueinander eine Auffächerung der Drallkörper 4 statt, wodurch der Strömungswiderstand und damit die Beeinflussung der Luft, welche die Luftausströmdüse 1 durchströmt, verändert wird.

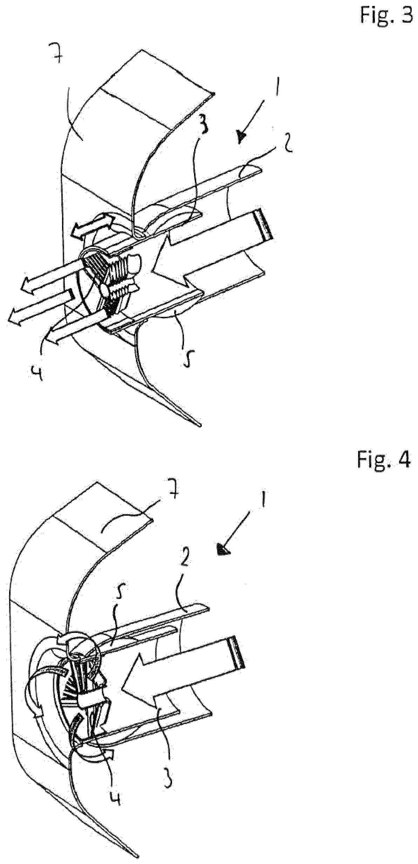

Die Fig. 3 zeigt eine perspektivische Schnittansicht durch eine Luftausströmdüse 1. In Fig. 3 ist die Luftausströmdüse mit einem herausgezogenen Ausströmkörper 3 dargestellt. Folglich sind die Drallkörper 4 im Ausströmkörper 3 so positioniert, dass eine gerichtete Luftströmung entsteht, Die Drallkörper 4 behindern dabei den Luftstrom durch die Luftausströmdüse möglichst gering.

In der Fig. 3 ist zu erkennen, wie das Kugelgelenk 5 des Ausströmkörpers 3 an der Innenwandung des Luftkanals 2 anliegt und den Ausströmkörper 3 damit innerhalb des Luftkanals 2 positioniert und fixiert.

Die Fig. 4 zeigt ebenfalls eine perspektivische Schnittansicht einer Luftausströmdüse 1. In Abwandlung zu Fig. 3 zeigt die Fig. 4 den Zustand, in dem der Ausströmkörper 3 vollständig in den Luftkanal 2 hineingedrückt ist. Zu erkennen ist, dass das Kugelgelenk 5 fest innerhalb des Luftkanals 2 positioniert ist. Der Ausströmkörper 3 wird bei einer Bewegung folglich auch relativ zu dem Kugelgelenk 5 verschoben.

Das Kugelgelenk 5 ermöglicht dabei die Bewegung des Ausströmkörpers 3 innerhalb des Luftkanals 2.

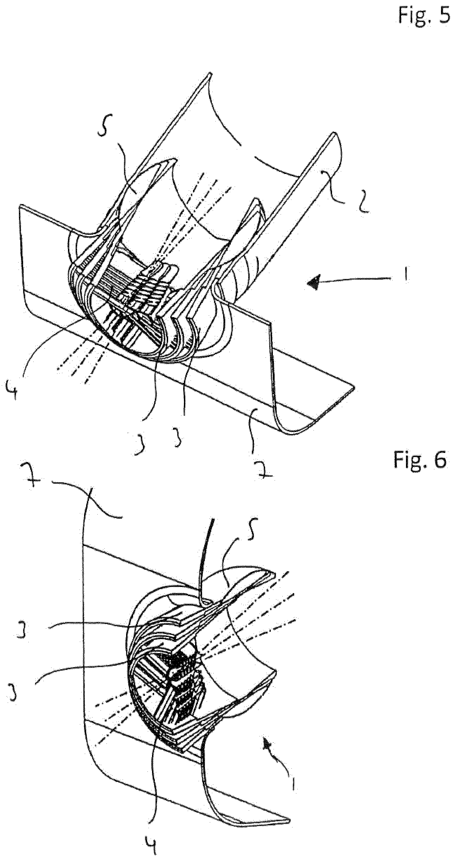

Die Fig. 5 zeigt eine weitere Schnittansicht der Luftausströmdüse 1. Hier ist zu erkennen, dass der Ausströmkörper 3, welcher über das Kugelgelenk 5 mit dem Luftkanal 2 verbunden ist, horizontal gegen den Luftkanal 2 verkippbar ist. Dies ist aufgrund des Kugelgelenkes 5 möglich.

In der Fig. 5 sind drei mögliche Positionen des Ausströmkörpers 3 gegenüber dem fixierten Luftkanal 2 angedeutet.

Die Fig. 6 zeigt ebenfalls eine Schnittansicht durch die Luftausströmdüse 1. In der Fig. 6 ist die vertikale Verstellbarkeit des Ausströmkörpers 3 relativ zum Luftkanal 2 dargestellt. Wie auch in Fig. 5 sind in der Fig. 6 ebenfalls drei mögliche Positionierungen des Ausströmkörpers 3 relativ zum Luftkanal 2 dargestellt.

Über das Kugelgelenk 5 ist sowohl eine horizontale als auch eine vertikale Verstellung des Ausströmkörpers 3 möglich. Auch Mischformen aus horizontaler und vertikaler Verstellung sind über das Kugelgelenk 5 möglich.

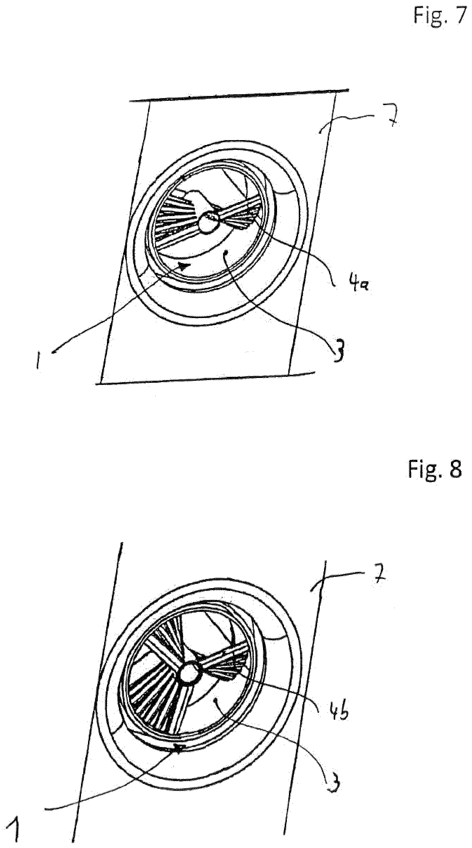

Fig. 7 zeigt eine Aufsicht auf die Luftaustrittsöffnung der Luftausströmdüse 1. Im Inneren des Ausströmkörpers 3, welcher in der Fig. 7 vollständig in den Luftkanal 2 hineingedrückt ist, ist eine Mehrzahl von Drallkörpern 4a angeordnet. In dem Ausführungsbeispiel der Fig. 7 weisen die Drallkörper 4a zwei Schaufeln auf, welche in einem Winkel von 180° zueinander um eine Mittelachse angeordnet sind.

Die einzelnen Drallkörper 4a können zum Erzeugen einer diffusen Strömung gegeneinander verdreht werden, so dass die Luft, welche aus dem Luftkanal 2 durch den Ausströmkörper 3 aus der Luftausströmdüse 1 hinausströmt, durch die der Luftströmung im Weg stehenden Drallkörper 4a abgelenkt wird.

Die Fig. 8 zeigt eine weitere Ausführungsform der Luftausströmdüse 1 analog der Fig. 7. In Abwandlung zur Fig. 7 weist die Fig. 8 Drallkörper 4b auf, welche aus jeweils drei Schaufeln gebildet sind, weiche in einem Winkel von 120° zueinander um eine Mittelachse angeordnet sind.

In alternativen Ausführungsformen ist ebenso eine Anordnung von Drallkörpern mit mehreren Schaufeln, z.B. vier, fünf oder sechs Schaufeln vorsehbar.

Die in den Fig. 1 bis 8 gezeigte Luftausströmdüse 1 weist jeweils einen kreisrunden Querschnitt des Luftkanals 2 sowie des Ausströmkörpers 3 auf. In alternativen Ausführungsformen sind auch hiervon abweichende Formgebungen vorsehbar. Vorteilhafter Weise weisen sowohl der Luftkanal als auch der Ausströmkörper eine identische oder ähnliche Grundform auf. Dies erleichtert es, den Ausströmkörper relativ zum Luftkanal zu verschieben. Übereinstimmende Grundformen sind jedoch nicht notwendig.

## Patentansprüche

1. Luftausströmdüse (1) mit einem Luftkanal (2), einem Ausströmkörper (3) und einem Drallkörper (4, 4a, 4b), wobei der Drallkörper (4, 4a, 4b) zumindest zwei drehbare Ringscheiben umfasst und innerhalb des Ausströmkörpers (3) angeordnet ist, und wobei der Ausströmkörper (3) zumindest teilweise innerhalb des Luftkanals (2) angeordnet ist, wobei die Ausrichtung des Ausströmkörpers (3) zum Luftkanal (2) um einen zur Mittelachse des Luftkanals (2) horizontalen und/oder um einen zur Mittelachse des Luftkanals (2) vertikalen Winkel veränderbar ist, **dadurch gekennzeichnet, dass** der Ausströmkörper (3) entlang der Luftströmungsrichtung im Luftkanal (2) relativ zum Luftkanal (2) beweglich ist und wobei der Drallkörper (4, 4a, 4b) durch eine Relativbewegung des Ausströmkörper (3) zum Luftkanal (2) bewegbar ist und wobei die Ringscheiben des Drallkörpers (4, 4a, 4b) durch eine lineare Bewegung des Ausströmkörpers (3) im und relativ zu dem Luftkanal (2) rotatorisch bewegbar sind.

2. Luftausströmdüse (1) nach Anspruch 1, **dadurch gekennzeichnet, dass** eine Mehrzahl von Drallkörpern (4, 4a, 4b) innerhalb des Ausströmkörpers (3) angeordnet ist.

3. Luftausströmdüse (1) nach einem der vorhergehenden Ansprüche, **dadurch gekennzeichnet, dass** der Ausströmkörper (3) über ein Kugelgelenk (5) im Luftkanal (2) gelagert ist.

4. Luftausströmdüse (1) nach einem der vorhergehenden Ansprüche, **dadurch gekennzeichnet, dass** durch eine Verstellung der Ringscheiben des Drallkörpers (4, 4a, 4b) oder der Drallkörper (4, 4a, 4b) eine diffuse Luftströmung (6) und/oder eine gerichtete Luftströmung (8) erzielbar ist.

5. Luftausströmdüse (1) nach einem der vorhergehenden Ansprüche, **dadurch gekennzeichnet, dass** durch das Herausziehen des Ausströmkörpers (3) relativ zum Luftkanal (2) die Anordnung der Ringscheiben des Drallkörpers (4, 4a, 4b) oder der Drallkörper (4, 4a, 4b) derart änderbar ist, dass eine gerichtete Luftströmung (8) entsteht, wobei der Ausströmkörper (3) bis zu einem durch einen Anschlag definierten Abstand aus dem Luftkanal (2) herausziehbar ist.

6. Luftausströmdüse (1) nach einem der vorhergehenden Ansprüche, **dadurch gekennzeichnet, dass** durch das Hineindrücken des Ausströmkörpers (3) in den Luftkanal (2) die Anordnung der Ringscheiben des Drallkörpers (4, 4a, 4b) oder der Drallkörper (4, 4a, 4b) derart änderbar ist, dass eine diffuse Luftströmung (6) entsteht, wobei der Ausströmkörper (3) bis zu einer durch einen Anschlag definierten Tiefe in den Luftkanal (2) hineindrückbar ist.

7. Luftausströmdüse (1) nach einem der vorhergehenden Ansprüche, **dadurch gekennzeichnet, dass** die Luftausströmdüse (1) in einen Instrumententräger (7), insbesondere einen Instrumententräger (7) eines Kraftfahrzeugs, integrierbar ist, wobei die Luftausströmdüse (1) im Instrumententräger (7) versenkbar ist.

8. Luftausströmdüse (1) nach einem der vorhergehenden Ansprüche, **dadurch gekennzeichnet, dass** der Ausströmkörper (3) und der Luftkanal (2) jeweils durch rohrförmige Grundkörper gebildet sind, wobei der Ausströmkörper (3) zumindest teilweise innerhalb des Luftkanals (2) angeordnet ist.

9. Luftausströmdüse (1) nach einem der vorhergehenden Ansprüche, **dadurch gekennzeichnet, dass** der Ausströmkörper durch Hineindrücken in den Luftkanal aus einer Verhakung lösbar ist und durch eine Feder zumindest teilweise aus dem Luftkanal hinausdrückbar ist.

## Claims

1. An air outlet nozzle (1) with an air channel (2), an outlet body (3) and a swirl body (4, 4a, 4b), wherein the swirl body (4, 4a, 4b) comprises at least two rotatable annular discs and is arranged within the outlet body (3) and wherein the outlet body (3) is at least partially disposed within the air channel (2), wherein the orientation of the outlet body (3) to the air channel (2) is variable by an angle which is horizontal to the central axis of the air channel (2) and/or vertical to the central axis of the air channel (2), **characterised in that** the outlet body (3) is moveable along the air flow direction in the air channel (2) relative to the air channel (2) and wherein the swirl body (4, 4a, 4b) is moveable by a relative movement of the outlet body (3) to the air channel (2) and wherein the annular discs of the swirl body (4, 4a, 4b) are rotationally moveable by a linear movement of the outlet body (3) inside and relative to the air channel (2).

2. The air outlet nozzle (1) according to claim 1, **characterised in that** a plurality of swirl bodies (4, 4a, 4b) is arranged inside the outlet body (3).

3. The air outlet nozzle (1) according to one of the preceding claims, **characterised in that** the outlet body (3) is mounted inside the air channel (2) via a ball joint (5).

4. The air outlet nozzle (1) according to one of the preceding claims, **characterised in that** a diffuse air flow (6) and/or a directed air flow (8) can be obtained by adjusting the annular discs of the swirl body (4, 4a, 4b) or of the swirl bodies (4, 4a, 4b).

5. The air outlet nozzle (1) according to one of the preceding claims, **characterised in that** by pulling out the outlet body (3) relative to the air channel (2), the arrangement of the annular discs of the swirl body (4, 4a, 4b) or of the swirl bodies (4, 4a, 4b) can be changed in such a manner that a directed air flow (8) is formed, wherein the outlet body (3) can be pulled out of the air channel (2) up to a distance defined by a stop.

6. The air outlet nozzle (1) according to one of the preceding claims, **characterised in that** by pushing the outlet body (3) into the air channel (2), the arrangement of the annular discs of the swirl body (4, 4a, 4b) or of the swirl bodies (4, 4a, 4b) can be changed in such a manner that a diffuse air flow (6) is formed, wherein the outlet body (3) can be pushed into the air channel (2) up to a depth defined by a stop.

7. The air outlet nozzle (1) according to one of the preceding claims, **characterised in that** the air outlet nozzle (1) can be integrated into an instrument panel (7), in particular an instrument panel (7) of a motor vehicle, wherein the air outlet nozzle (1) is retractable into the instrument panel (7).

8. The air outlet nozzle (1) according to one of the preceding claims, **characterised in that** the outlet body (3) and the air channel (2) are each formed by tubular base bodies, wherein the outlet body (3) is at least partially disposed within the air channel (2).

9. The air outlet nozzle (1) according to one of the preceding claims, **characterised in that** the outlet body can be released from a hooking by pushing it into the air channel and can be at least partially pushed out of the air channel by means of a spring.

## Revendications

1. Buse de diffusion d'air (1) comprenant un conduit d'air (2), un corps de diffusion (3) et un corps tourbillonnaire (4, 4a, 4b), où le corps tourbillonnaire (4, 4a, 4b) comprend au moins deux plaques annulaires rotatives et est disposé à l'intérieur du corps de diffusion (3), et où le corps de diffusion (3) est disposé au moins partiellement à l'intérieur du conduit d'air (2), où l'alignement du corps de diffusion (3), par rapport au conduit d'air (2), peut être modifié suivant un angle horizontal par rapport à l'axe médian du conduit d'air (2) et / ou suivant un angle vertical par rapport à l'axe médian du conduit d'air (2), **caractérisée en ce que** le corps de diffusion (3) est mobile par rapport au conduit d'air (2), le long de la direction de l'écoulement d'air qui se produit dans le conduit d'air (2), et où le corps tourbillonnaire (4, 4a, 4b) peut être déplacé par rapport au conduit d'air (2), par un mouvement relatif du corps de diffusion (3), et où les plaques annulaires du corps de diffusion (4, 4a, 4b) peuvent être déplacées, en rotation, par un mouvement linéaire du corps de diffusion (3) se produisant dans le conduit d'air (2) et par rapport à celui-ci.

2. Buse de diffusion d'air (1) selon la revendication 1, **caractérisée en ce qu'**une pluralité de corps tourbillonnaires (4, 4a, 4b) est disposée à l'intérieur du corps de diffusion (3).

3. Buse de diffusion d'air (1) selon l'une des revendications précédentes, **caractérisée en ce que** le corps de diffusion (3) est monté dans le conduit d'air (2) grâce à une articulation à rotule (5).

4. Buse de diffusion d'air (1) selon l'une quelconque des revendications précédentes, **caractérisée en ce qu'**un écoulement d'air diffus (6) et / ou un écoulement d'air dirigé (8) peut être obtenu par un déplacement des plaques annulaires du corps tourbillonnaire (4, 4a, 4b) ou des corps tourbillonnaires (4, 4a, 4b).

5. Buse de diffusion d'air (1) selon l'une quelconque des revendications précédentes, **caractérisée en ce que** l'agencement des plaques annulaires du corps tourbillonnaire (4, 4a, 4b) ou des corps tourbillonnaires (4, 4a, 4b) peut être modifié par le fait que le corps de diffusion (3) est retiré du conduit d'air (2), de manière telle qu'il se produise un écoulement d'air dirigé (8), où le corps de diffusion (3) peut être retiré du conduit d'air (2), jusqu'à une distance définie par une butée.

6. Buse de diffusion d'air (1) selon l'une quelconque des revendications précédentes, **caractérisée en ce que** l'agencement des plaques annulaires du corps tourbillonnaire (4, 4a, 4b) ou des corps tourbillonnaires (4, 4a, 4b) peut être modifié par l'enfoncement du corps de diffusion (3) dans le conduit d'air (2), de manière telle qu'il se produise un écoulement d'air diffus (6), où le corps de diffusion (3) peut être enfoncé dans le conduit d'air (2), jusqu'à une profondeur définie par une butée.

7. Buse de diffusion d'air (1) selon l'une quelconque des revendications précédentes, **caractérisée en ce que** la buse de diffusion d'air (1) peut être intégrée dans un support de tableau de bord (7), en particulier un support de tableau de bord (7) d'un véhicule automobile, où la buse de diffusion d'air (1) peut être noyée dans le support de tableau de bord (7).

8. Buse de diffusion d'air (1) selon l'une quelconque des revendications précédentes, **caractérisée en ce que** le corps de diffusion (3) et le conduit d'air (2) sont formés respectivement par des corps de base de forme tubulaire, où le corps de diffusion (3) est disposé au moins partiellement à l'intérieur du conduit d'air (2).

9. Buse de diffusion d'air (1) selon l'une quelconque des revendications précédentes, **caractérisée en ce que** le corps de diffusion peut être détaché d'un accrochage, en exerçant une poussée dans le conduit d'air, et peut être repoussé au moins partiellement hors du conduit d'air grâce à un ressort.
